# EUROPEAN PATENT SPECIFICATION

(11) **EP 4 061 773 B1**
(45) Date of publication and mention of the grant of the patent: **03.04.2024**
(21) Application number: 20808130.7
(22) Date of filing: 20.11.2020
(51) Int. Cl.: C01D 15/00, H01M 6/18

(54) **PREPARATION METHOD OF LITHIUM THIOPHOSPHATE**
VERFAHREN ZUR HERSTELLUNG VON LITHIUMTHIOPHOSPHAT
PROCÉDÉ DE PRÉPARATION DE THIOPHOSPHATE DE LITHIUM

(30) Priority: 20.11.2019 EP 19306493
(43) Date of publication of application: 28.09.2022
(73) Proprietor: SYENSQO SA, 1130 Brussels (BE)
(72) Inventor: BRAIDA, Marc-David, 94360 BRY-SUR-MARNE (FR); D'ALENCON, Lauriane, 92130 ISSY-LES-MOULINEAUX (FR); COMPAIN, Jean-Daniel, 92400 Courbevoie (FR); LE MERCIER, Thierry, 93110 ROSNY-SOUS-BOIS (FR)
(74) Representative: Ferri, Isabella
(86) International application number: PCT/EP2020/082993
(87) International publication number: WO 2021/099626

(56) References cited:
- US-A1- 2019 074 544
- ÖMER ULAS KUDU ET AL: "A review of structural properties and synthesis methods of solid electrolyte materials in the Li2S - P2S5 binary system", JOURNAL OF POWER SOURCES, vol. 407, 1 December 2018 (2018-12-01), pages 31-43, XP055696188, CH ISSN: 0378-7753, DOI: 10.1016/j.jpowsour.2018.10.037
- LAIDONG ZHOU ET AL: "Solvent-Engineered Design of Argyrodite Li 6 PS 5 X (X = Cl, Br, I) Solid Electrolytes with High Ionic Conductivity", ACS ENERGY LETTERS, vol. 4, no. 1, 20 November 2018 (2018-11-20), pages 265-270, XP055696186, ISSN: 2380-8195, DOI: 10.1021/acsenergylett.8b01997 -& Laidong Zhou ET AL: "Supporting Information for: Solvent-Engineered Design of Argyrodite Li 6 PS 5 X (X= Cl, Br, I) Solid Electrolytes with High Ionic Conductivity", , 20 November 2018 (2018-11-20), XP055697908, Retrieved from the Internet: URL:https://pubs.acs.org/doi/suppl/10.1021 /acsenergylett.8b01997/suppl_file/nz8b0199 7_si_001.pdf [retrieved on 2020-05-25]

## Description

The present invention concerns a method for the preparation of lithium thiophosphate.

### PRIOR ART

Lithium batteries are used to power portable electronics and electric vehicles owing to their high energy and power density. Conventional lithium batteries make use of a liquid electrolyte that is composed of a lithium salt dissolved in an organic solvent. The aforementioned system arises security questions as the organic solvents are flammable. Lithium dendrites forming and passing through the liquid electrolyte medium can cause short circuit and produce heat, which result in accident that leads to serious injuries.

Solid sulfide electrolytes are advantageous for lithium battery applications due to their high ionic conductivities and mechanical properties. These electrolytes can be pelletized and attached to electrode materials by cold pressing, which eliminates the necessity of a high temperature assembly step. Elimination of the high temperature sintering step removes one of the challenges against using lithium metal anodes in lithium batteries.

Argyrodites have long been known and are derived from argyrodite Ag₈GeS₆, which was described for the first time in 1886 by C. Winkler and the analysis of which led to the discovery of germanium. The argyrodite family consists of more than 100 crystalline solids and includes, for example, those solid-state compounds in which the silver is replaced by copper, the germanium by gallium or phosphorus and the sulfur by selenium. Thus, Nitsche, Kuhs, Krebs, Evain, Boucher, Pfitzner and Nilges describe, inter alia, compounds such as Cu₉GaS₆, Ag₇PSe₆ and Cu₈GaS₅Cl, the solid-state structures of which are derived from argyrodite.

ÖMER ULAS KUDU ET AL: "A review of structural properties and synthesis methods of solid electrolyte materials in the Li2S - P2S5 binary system", JOURNAL OF POWER SOURCES, vol. 407, 1 December 2018 (2018-12-01), pages 31-43, CH, ISSN: 0378-7753, DOI: 10.1016/ j.jpowsour.2018.10.037, describes the preparation of lithium thiophosphates by wet chemistry by mixing Li₂S and P₂S₅ in a solvent at room temperature.

There exists thus a need for a full solution route for the preparation of a sulfide-based solid electrolyte.

### INVENTION

The aim of the present invention is to provide a sulfide-based solid electrolyte with LiPS, prepared by a synthesis route preferably both faster and easier to set up compared to previously described methods.

The aim of the present invention is to provide a new process for the preparation in solution of a LiPS material having preferably improved productivity and allowing a control of the morphology of the obtained product.

The aim of the present invention is also to provide a method for the preparation of a halogen-free argyrodite Li₇PS₆ with improved transport properties.

Thus, the present invention relates to a method of preparing a lithium thiophosphate comprising at least one step for the preparation of a solution S1 at a temperature T1 comprised from -200°C to 10°C, preferably from -110°C to 0°C, said solution S1 comprising a solvent and at least P species under the form of (PS₄)³⁻, Li species under the form of Li⁺, and remaining sulfur under the form of polysulfide, followed by a step for removing at least a portion of the solvent from said solution to obtain lithium thiophosphate.

### DEFINITIONS

Throughout this specification, unless the context requires otherwise, the word "comprise" or "include", or variations such as "comprises", "comprising", "includes", including" will be understood to imply the inclusion of a stated element or method step or group of elements or method steps, but not the exclusion of any other element or method step or group of elements or method steps. According to preferred embodiments, the word "comprise" and "include", and their variations mean "consist exclusively of".

As used in this specification, the singular forms "a", "an" and "the" include plural aspects unless the context clearly dictates otherwise. The term "and/or" includes the meanings "and", "or" and also all the other possible combinations of the elements connected to this term.

The term "between" should be understood as being inclusive of the limits.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a temperature range of about 120°C to about 150°C should be interpreted to include not only the explicitly recited limits of about 120°C to about 150°C, but also to include sub-ranges, such as 125°C to 145°C, 130°C to 150°C, and so forth, as well as individual amounts, including fractional amounts, within the specified ranges, such as 122.2°C, 140.6°C, and 141.3°C, for example.

The term "electrolyte" refers in particular to a material that allows ions, e.g., Li⁺, to migrate therethrough but which does not allow electrons to conduct therethrough. Electrolytes are useful for electrically isolating the cathode and anodes of a battery while allowing ions, e.g., Li⁺, to transmit through the electrolyte. The "solid electrolyte" according to the present invention means in particular any kind of material in which ions, for example, Li⁺, can move around while the material is in a solid state.

The term "electrochemical device" refers in particular to a device which generates and/or stores electrical energy by, for example, electrochemical and/or electrostatic processes. Electrochemical devices may include electrochemical cells such as batteries, notably solid state batteries. A battery may be a primary (i.e., single or "disposable" use) battery, or a secondary (i.e., rechargeable) battery.

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more different sources of power, for example both gasoline-powered and electric-powered vehicles.

### DETAILED INVENTION

The method of the invention is based on the preparation of a homogeneous solution comprising ionic species. It thus does not involve a suspension.

All species involved in the preparation of lithium thiophosphate are thus dissolved in a solvent and are in the form of ionic species as mentioned above.

An essential feature of the method of the invention is the temperature T1 as defined above. The method of the invention is thus carried out at a low temperature, notably in order to dissolve all the species and thus to obtain the solution S1 at the required temperature.

Once the solution S1 is prepared, then a step for removing at least a portion of the solvent is carried out. Then lithium thiosulfate is obtained as a solid, preferably as a powder.

Preferably, the term "at least a portion of the solvent" refers to at least 50% by weight of said solvent, preferably at least 60% by weight of said solvent.

The P species under the form of (PS₄)³⁻ are preferably obtained from a precursor chosen in the group consisting of: P₂S₅, P₄S₁₀, P₄S₉ and P₄S₉₊ₓ (with 0<x<1).

The Li species under the form of Li⁺ are preferably obtained from a precursor chosen in the group consisting of: Li₂S and LiHS.

The remaining sulfur under the form of polysulfide is preferably obtained from a precursor chosen in the group consisting of: P₂S₅, P₄S₁₀, P₄S₉, P₄S₉₊ₓ (with 0<x<1), Li₂S, S and LiHS.

According to an embodiment, the solution S1 is obtained by admixing lithium sulfide and phosphorus sulfide in the solvent, at a temperature ranging from -200°C to 10°C, preferably from -110°C to 0°C.

According to this embodiment, all the reactants are advantageously added together into the solvent at the temperature T1.

According to another embodiment, the solution S1 as defined above is obtained by carrying out the following steps:
- obtaining a precursor solution by admixing lithium sulfide in the solvent; and
- adding phosphorus sulfide into said precursor solution at a temperature comprised from -200°C to 10°C, preferably from -110°c to 0°c, in order to obtain said solution S1.

According to this embodiment, the solution S1 is prepared in two steps.

Preferably, the step for removing at least a portion of the solvent from the solution S1 is carried out at a temperature comprised from 30°C to 200°C, preferably from 30°C to 100°C. According to an embodiment, this temperature can be comprised from 35°C to 65°C.

The step for removing the solvent may be carried out by implementing conventional means, in particular by solvent evaporation.

This preferred temperature range for the solvent elimination is advantageous in that the secondary reactions are not promoted at such temperature values.

The preparation of the solution S1 may occur in an inert atmosphere, under vacuum or under H₂S flow.

According to an embodiment, the method of the invention comprises a further step, after the step for removing the solvent. Preferably, after the solvent removal, lithium thiophosphate is then thermally treated at a temperature comprised from 150°C to 700°C.

Such step consists in a thermal treatment of the solid lithium thiosulfate obtained after the step for removing the solvent.

Preferably, the solvent used in the method of the invention is able to dissolve lithium thiophosphate, lithium sulfide and phosphorus sulfide. As mentioned above, this solvent thus gives a homogeneous solution S1 as previously defined.

According to a preferred embodiment, the solvent is an aliphatic alcohol. Most preferably, the solvent is chosen from the group consisting of: ethanol, methanol and mixtures thereof.

According to a preferred embodiment, the temperature T1 is comprised from - 110°C to 0°C, preferably from -110°C to -10°C, and most preferably from -100°C to - 50°C, notably from -90°C to -70°C. For example, T1 is of about -80°C.

According to a specific embodiment, the temperature used during the step from removing at least a portion of the solvent from the solution S1 is comprised from 35°C to 65°C and the temperature T1 is comprised from -110°C to -10°C, preferably from -100°C to -50°C.

In particular, during the preparation of the solution S1, the temperature T1 remains constant.

Advantageously, the method according to the invention allows much less and even none global and local deviation with respect to the stoichiometry.

According to an embodiment, the lithium thiophosphate is chosen in the group consisting of: Li₃PS₄, Li₇PS₆, Li₇P₃S₁₁ and Li_{9.6}P₃S_{12.}

Lithium sulfide is generally a compound including one or more of sulfur atoms and one or more of lithium atoms, or alternatively, one or more of sulfur containing ionic groups and one or more of lithium containing ionic groups. In certain preferred aspects, lithium sulfide may consist of sulfur atoms and lithium atoms.

Phosphorus sulfide is generally a compound including one or more of sulfur atoms and one or more of phosphorus atoms, or alternatively, one or more of sulfur containing ionic groups and one or more of phosphorus containing ionic groups. In certain preferred aspects, phosphorus sulfide may consist of sulfur atoms and phosphorus atoms. Examples of phosphorus sulfide may include, but are not limited to, P₂S₅, P₄S₃, P₄S₁₀, P₄S₄, P₄S₅, P₄S₆, P₄S₇, P₄S₈ and P₄S₉.

Preferably, the lithium sulfide may include or is lithium sulfide Li₂S, and the phosphorus sulfide may include or is phosphorus pentasulfide P₂S₅.

The solution S1 may comprise at least 50% mol. of Li species under the form of Li+, with respect to the total amount in moles of lithium sulfide added in the solvent, preferably at least 80% mol. of Li species under the form of Li+, more preferably at least 95% mol. of Li species under the form of Li+.

The solution S1 may comprise at least P species under the form of (PS₄)³⁻ and (P₂S₇)⁴⁻.

The solution S1 may comprise at least 50% mol. of P species under the form of (PS₄)³⁻, with respect to the total amount in moles of phosphorus sulfide added in the solvent, preferably at least 80% mol. of P species under the form of (PS₄)³⁻, more preferably at least 95% mol. of P species under the form of (PS₄)³⁻, or at least 99% mol. of P species under the form of (PS₄)³⁻.

Typically, a lithium solid-state battery includes a positive electrode active material layer containing a positive electrode active material, a negative electrode active material layer containing a negative electrode active material, and a solid electrolyte layer formed between the positive electrode active material layer and the negative electrode active material layer. At least one of the positive electrode active material layer, the negative electrode active material layer, and the solid electrolyte layer includes a solid electrolyte comprising a lithium thiophosphate, as defined above.

### FIGURES

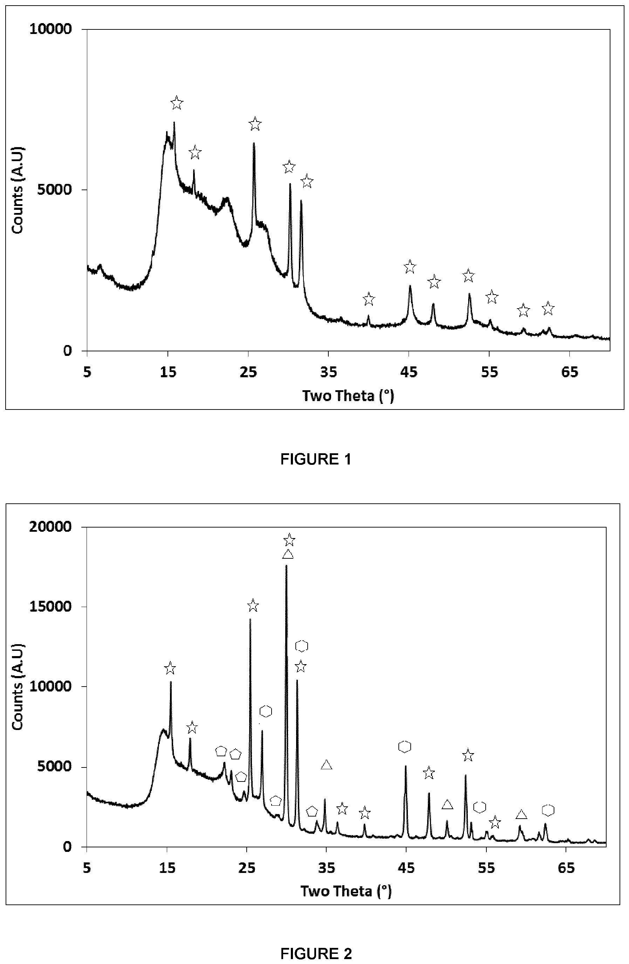

Figure 1: XRD of Example 1 after synthesis. The stars correspond to Li₇PS₆.
Figure 2: XRD Example 1 after 550°C annealing. The stars correspond to Li₇PS₆, the triangles correspond to LiCI, the pentagons corresponds to Li₃PO₄, and the hexagons correspond to Li₂S.

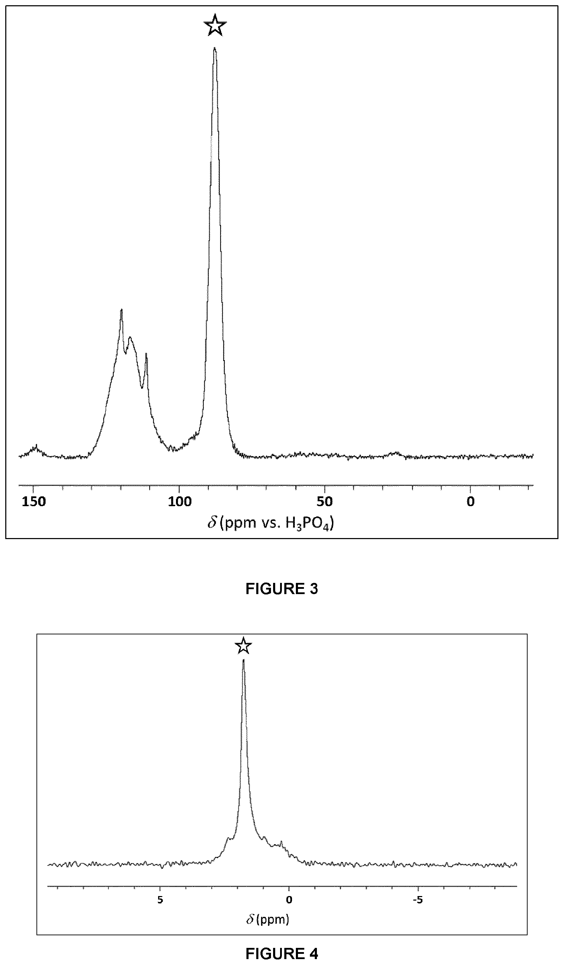

Figure 3: ³¹P Solid State NMR spectrum of Example 1 before annealing. The star corresponds to PS₄³⁻.
Figure 4: ⁶Li Solid State NMR spectrum of Example 1 before annealing. The star corresponds to Li in Li₇PS₆.

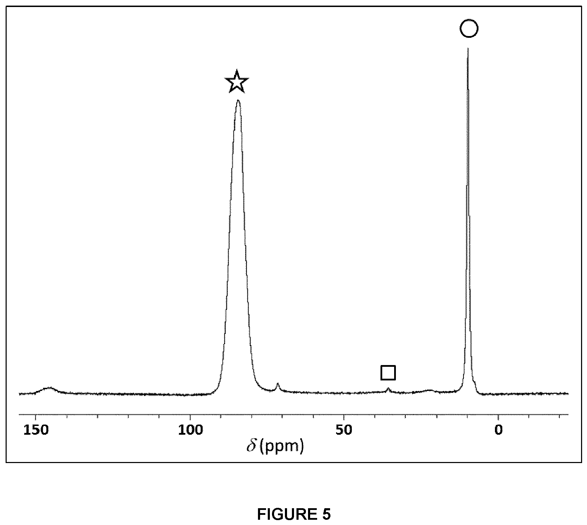

Figure 5: ³¹P Solid State NMR spectrum of Example 1 after 550 °C annealing. The star corresponds to PS₄³⁻; the circle corresponds to PO₄³⁻ and the square corresponds to partially oxidized thiophosphate. Other signals are artifacts (spinning side-bands).

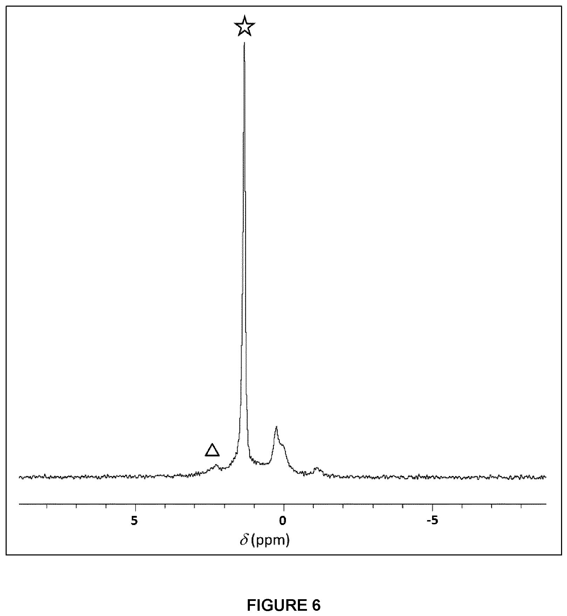

Figure 6: ⁶Li Solid State NMR spectrum of Example 1 after 550 °C annealing. The star corresponds to Li in Li₇PS₆ and the triangle corresponds to residual Li₂S.

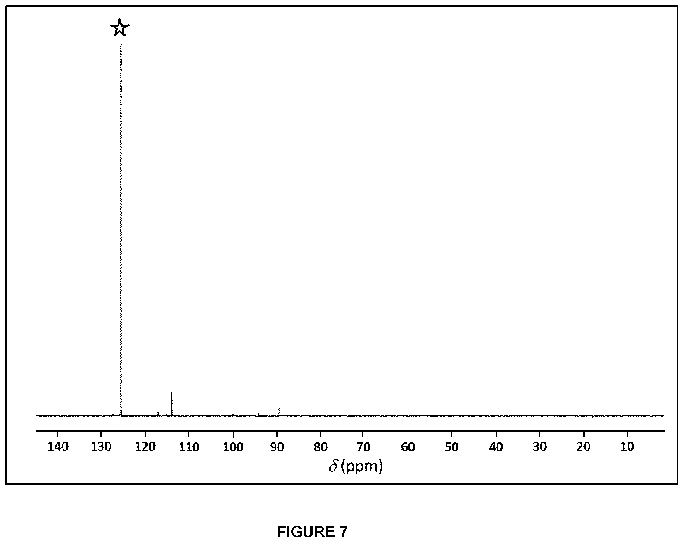

Figure 7: ³¹P NMR on Li₇PS₆ before annealing, dissolved in anhydrous ethanol + 10 % DMSO-D6. The star is PS₄³⁻ solvated by ethanol.

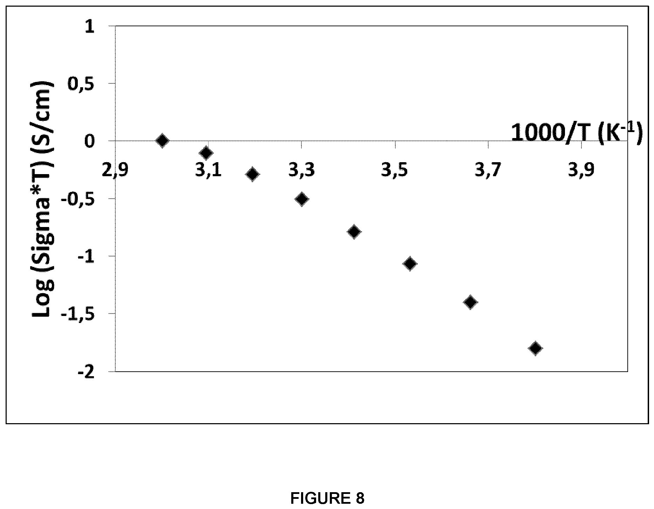

Figure 8: Arrhenius plot of Li₇PS₆ annealed at 550°C.

### EXAMPLE

The example below serves to illustrate the invention, but has no limiting character.

### X-Ray Diffraction:

The XRD diffractograms of the powders were acquired on a XRD goniometer in the Bragg Brentano geometry, with a Cu X Ray tube (Cu Kalpha wavelength of 1.5406 Å). The setup may be used in different optical configurations, *i.e.* with variable or fixed divergence slits, or Soller slits. A filtering device on the primary side may also be used, like a monochromator or a Bragg Brentano HD optics from Panalytical. If variable divergence slits are used; the typical illuminated area is 10 mm × 10 mm. The sample holder is loaded on a spinner; rotation speed is typically 60 rpm during the acquisition. Tube settings were operating at 40 kV/30 mA for variable slits acquisition and at 45 kV/40 mA for fixed slits acquisition with incident Bragg Brentano HD optics. Acquisition step was 0.017° per step. Angular range is typically 5° to 90° in two theta or larger. Total acquisition time was typically 30 min or longer.

The powders are covered by a Kapton film to prevent reactions with air moisture.

### Conductivity measurements:

The conductivity was acquired on pellets done using a uniaxial press operated at 500MPa.

The measurement is done under a loading of 40MPa and two carbon paper foils are used as current collector in a pressure cell from MTI (BATTE-CELL-0067 EQ-PSC-15-P).

The impedance spectra are acquired on a Biologic VMP3 device and the control of temperature is ensured by a Binder climatic chamber. Duration of two hours is set to allow the temperature to be equilibrated between two measurements.

Impedance spectroscopy is acquired in PElS mode with an amplitude of 10mV and a range of frequencies from 1 MHz to 1kHz (25 points per decade and a mean of 50 measurements per frequency point.)

### Liquid state NMR

³¹P solution NMR spectra were recorded on a Bruker 300 MHz spectrometer equipped with a QNP Z-GRD Z8352/107 probe. Relaxation time was 7 s. Spectra were de-coupled from ¹H.

### Solid-State NMR

Solid-State NMR spectra were recorded on a Bruker Avance 400 spectrometer equipped with a high-speed DVT4 probe. ³¹P and ⁶Li measurements were performed by magic-angle-spinning (MAS) at a speed of 10 kHz, in single-pulse mode with a relaxation time D1 depending on the experiment (see Example below). ⁷Li measurements were performed in the static, single-pulse mode with a relaxation time D1 = 120 s. Reference for ³¹P NMR was 85% H₃PO₄, for ⁶Li NMR a 5 mol L⁻¹ aqueous LiCI solution.

### Example 1 - Preparation of Li₇PS₆

Li₂S (724 mg, Albemarle) was weighed in a 100 mL Schlenk flask, in an Ar-filled glove box with oxygen and moisture levels both below 1 ppm. 30 mL of anhydrous ethanol (VWR, water content below 50 ppm) were added to the flask. The flask was then taken out of the glove box and connected to a N₂ / vacuum line. The resulting mixture was stirred for 20 min under inert atmosphere (dry nitrogen).

P₂S₅ (574 mg, BK Giulini) was weighed in a 100 mL three-necked flask. It was cooled to -80°C for 30 min using a dry ice / acetone bath, then the above Li₂S solution was rapidly transferred to the flask using a Teflon cannula. The solution was then stirred for 5 h while keeping the temperature at -80 °C. No further change was observed. The solvent was then slowly removed under primary vacuum, first at room temperature, then when the solution was concentrated to ca. 60% of its initial volume the temperature was increased to 50 °C, and left at this value overnight. The resulting product was a pale yellow powder. It was characterized by powder X-ray diffraction, solid-state ³¹Pand ⁶Li MAS NMR (D1 = 60 s for both nuclei), and solid-state ⁷Li static NMR. The XRD powder diagram indicates the predominance of a Li₇PS₆ phase well crystallized in its High temperature polymorph (space group F-43m). The ³¹P solid-state NMR spectrum is in accordance with the presence of PS₄³⁻ entities inside of the solid.

Conductivity has been measured by impedance spectroscopy on a pellet of the material, it amounts to σ = 6×10⁻⁷ S.cm⁻¹ at room temperature.

Then, in an Ar-filled glove box, 325 mg of this solid were manually ground in an agate mortar and transferred into a quartz tube sealed at one end (length 250 mm, inner diameter 10 mm, wall thickness 1.1 mm). The tube was taken out of the glove box and rapidly connected to a vacuum line, equipped with a manometer, through a PVC vacuum tube. Once the pressure measured inside the system was below 1 mbar, the tube was sealed using a torch fueled by propane and oxygen. The sealed tube was heated up to 550°C inside a muffle furnace following a 2°C / min ramp, and the temperature was kept at this value for 5 h. Once the furnace had cooled down to 30 °C the tube was taken back inside of the glove box, cut with a tungsten carbide cutter, and the dark brown solid inside was collected. This solid was characterized by powder X-ray diffraction, ³¹P and ⁶Li solid-state MAS NMR (D1 = 500 s and 3000 s, respectively), and impedance spectroscopy. It exhibits the Li₇PS₆ phase in its high temperature polymorph (space group F-43m) with impurities of LiCI, Li₂S and Li₃PO₄ The conductivity of the sample at room temperature is the highest reported so far for this type of material reaching 1,03 mS.cm⁻¹ with activation energy of 0.47eV between -20°C and 60°C.

## Claims

1. A method of preparing a lithium thiophosphate comprising at least one step for the preparation of a solution S1 at a temperature T1 comprised from -200°C to 10°C, said solution S1 comprising a solvent and at least P species under the form of (PS₄)³⁻, Li species under the form of Li⁺, and remaining sulfur under the form of polysulfide, followed by a step for removing at least a portion of the solvent from said solution S1 to obtain lithium thiophosphate.

2. The method according to claim 1, wherein the solution S1 is obtained by admixing lithium sulfide and phosphorus sulfide in the solvent, at a temperature comprised from -200°C to 10°C.

3. The method according to claim 1, wherein the solution S1 is obtained from the following steps:
- obtaining a precursor solution by admixing lithium sulfide in the solvent;
- adding phosphorus sulfide into said precursor solution at a temperature comprised from -200°C to 10°C; in order to obtain said solution S1.

4. The method according to any one of claims 1 to 3, wherein the preparation of the solution S1 occurs in an inert atmosphere, under vacuum or under H₂S flow.

5. The method according to any one of claims 1 to 4, wherein lithium thiophosphate is then thermally treated at a temperature comprised from 150°C to 700°C.

6. The method according to any one of claims 1 to 5, wherein the solvent is able to dissolve lithium thiophosphate, lithium sulfide and phosphorus sulfide.

7. The method according to any one of claims 1 to 6, wherein the solvent is an aliphatic alcohol.

8. The method according to any one of claims 1 to 7, wherein the lithium thiophosphate is chosen in the group consisting of: Li₃PS₄, Li₇PS₆, Li₇P₃S₁₁, and Li_{9.6}P₃S₁₂.

9. The method according to anyone of claims 1 to 8, wherein the solution S1 comprises at least 50% mol. of Li species under the form of Li+, with respect to the total amount in moles of lithium sulfide added in the solvent, preferably at least 80% mol. of Li species under the form of Li+, more preferably at least 95% mol. of Li species under the form of Li+.

10. The method according to anyone of claims 1 to 9, wherein the solution S1 comprises at least 50% mol. of P species under the form of (PS₄)³⁻, with respect to the total amount in moles of phosphorus sulfide added in the solvent, preferably at least 80% mol. of P species under the form of (PS₄)³⁻, more preferably at least 95% mol. of P species under the form of (PS₄)³⁻.

11. The method according to anyone of claims 1 to 10, wherein the temperature T1 is comprised from -100°C to -50°C and the step for removing at least a portion of the solvent from the solution S1 is carried out at a temperature comprised from 35°C to 65°C.

## Patentansprüche

1. Verfahren zur Herstellung eines Lithiumthiophosphats, umfassend mindestens einen Schritt zur Herstellung einer Lösung S1 bei einer Temperatur T1 von -200 °C bis 10 °C, wobei die Lösung S1 ein Lösungsmittel und mindestens eine P-Spezies in der Form von (PS₄)³⁻, Li-Spezies in der Form von Li⁺ und restlichen Schwefel in der Form von Polysulfid umfasst, gefolgt von einem Schritt zum Entfernen mindestens eines Teils des Lösungsmittels aus der Lösung S1 unter Erhalt von Lithiumthiophosphat.

2. Verfahren nach Anspruch 1, wobei die Lösung S1 durch Beimischen von Lithiumsulfid und Phosphorsulfid zu dem Lösungsmittel bei einer Temperatur von -200 °C bis 10 °C erhalten wird.

3. Verfahren nach Anspruch 1, wobei die Lösung S1 aus den folgenden Schritten erhalten wird:
- Erhalten einer Vorläuferlösung durch Beimmischen von Lithiumsulfid zu dem Lösungsmittel;
- Zugeben von Phosphorsulfid zu der Vorläuferlösung bei einer Temperatur von -200 °C bis 10 °C; um die Lösung S1 zu erhalten.

4. Verfahren nach einem der Ansprüche 1 bis 3, wobei die Herstellung der Lösung S1 in einer Inertatmosphäre, unter Vakuum oder unter H₂S-Strom erfolgt.

5. Verfahren nach einem der Ansprüche 1 bis 4, wobei Lithiumthiophosphat dann bei einer Temperatur von 150 °C bis 700 °C thermisch behandelt wird.

6. Verfahren nach einem der Ansprüche 1 bis 5, wobei das Lösungsmittel in der Lage ist, Lithiumthiophosphat, Lithiumsulfid und Phosphorsulfid zu lösen.

7. Verfahren nach einem der Ansprüche 1 bis 6, wobei es sich bei dem Lösungsmittel um einen aliphatischen Alkohol handelt.

8. Verfahren nach einem der Ansprüche 1 bis 7, wobei das Lithiumthiophosphat aus der Gruppe bestehend aus Li₃PS₄, Li₇PS₆, Li₇P₃S₁₁ und Li_{9,6}P₃S₁₂ ausgewählt wird.

9. Verfahren nach einem der Ansprüche 1 bis 8, wobei die Lösung S1 mindestens 50 Mol-% Li-Spezies in der Form von Li⁺, bezogen auf die Gesamtmenge in Mol von zugegebenem Lithiumsulfid in dem Lösungsmittel, bevorzugt mindestens 80 Mol-% Li-Spezies in der Form von Li⁺, weiter bevorzugt mindestens 95 Mol-% Li-Spezies in der Form von Li⁺, umfasst.

10. Verfahren nach einem der Ansprüche 1 bis 9, wobei die Lösung S1 mindestens 50 Mol-% P-Spezies in der Form von (PS₄)³⁻, bezogen auf die Gesamtmenge in Mol von zugegebenem Phosphorsulfid in dem Lösungsmittel, bevorzugt mindestens 80 Mol-% P-Spezies in der Form von (PS₄)³⁻, weiter bevorzugt mindestens 95 Mol-% P-Spezies in der Form von (PS₄)³⁻, umfasst.

11. Verfahren nach einem der Ansprüche 1 bis 10, wobei die Temperatur T1 -100 °C bis -50 °C beträgt und der Schritt zum Entfernen mindestens eines Teils des Lösungsmittels aus der Lösung S1 bei einer Temperatur von 35 °C bis 65 °C durchgeführt wird.

## Revendications

1. Procédé de préparation d'un thiophosphate de lithium comprenant au moins une étape pour la préparation d'une solution S1 à une température T1 comprise de -200 °C à 10 °C, ladite solution S1 comprenant un solvant et au moins une espèce de P sous la forme de (PS₄)³⁻, une espèce de Li sous la forme de Li⁺, et le reste étant du soufre sous la forme de polysulfure, suivie par une étape pour l'élimination d'au moins une partie du solvant de ladite solution S1 pour obtenir du thiophosphate de lithium.

2. Procédé selon la revendication 1, la solution S1 étant obtenue en mélangeant du sulfure de lithium et du sulfure de phosphore dans le solvant, à une température comprise de -200 °C à 10 °C.

3. Procédé selon la revendication 1, la solution S1 étant obtenue à partir des étapes suivantes :
- obtention d'une solution de précurseur en mélangeant du sulfure de lithium dans le solvant ;
- ajout de sulfure de phosphore dans ladite solution de précurseur à une température comprise de -200 °C à 10 °C ; afin d'obtenir ladite solution S1.

4. Procédé selon l'une quelconque des revendications 1 à 3, la préparation de la solution S1 ayant lieu dans une atmosphère inerte, sous vide ou sous un flux de H₂S.

5. Procédé selon l'une quelconque des revendications 1 à 4, le thiophosphate de lithium étant ensuite traité thermiquement à une température comprise de 150 °C à 700 °C.

6. Procédé selon l'une quelconque des revendications 1 à 5, le solvant étant capable de dissoudre le thiophosphate de lithium, le sulfure de lithium et le sulfure de phosphore.

7. Procédé selon l'une quelconque des revendications 1 à 6, le solvant étant un alcool aliphatique.

8. Procédé selon l'une quelconque des revendications 1 à 7, le thiophosphate de lithium étant choisi dans le groupe constitué par : Li₃PS₄, Li₇PS₆, Li₇P₃S₁₁ et Li_{9,6}P₃S₁₂.

9. Procédé selon l'une quelconque des revendications 1 à 8, la solution S1 comprenant au moins 50 % en moles d'espèce de Li sous la forme de Li+, par rapport à la quantité totale en moles de sulfure de lithium ajouté dans le solvant, préférablement au moins 80 % en moles d'espèce de Li sous la forme de Li+, plus préférablement au moins 95 % en moles d'espèce de Li sous la forme de Li+.

10. Procédé selon l'une quelconque des revendications 1 à 9, la solution S1 comprenant au moins 50 % en moles d'espèce de P sous la forme de (PS₄)³⁻, par rapport à la quantité totale en moles de sulfure de phosphore ajouté dans le solvant, préférablement au moins 80 % en moles d'espèce de P sous la forme de (PS₄)³⁻, plus préférablement au moins 95 % en moles d'espèce de P sous la forme de (PS₄)³⁻.

11. Procédé selon l'une quelconque des revendications 1 à 10, la température T1 étant comprise de -100 °C à -50 °C et l'étape pour l'élimination d'au moins une partie du solvant de la solution S1 étant mise en œuvre à une température comprise de 35 °C à 65 °C.
